# EUROPEAN PATENT SPECIFICATION

(11) **EP 1 371 281 B1**
(45) Date of publication and mention of the grant of the patent: **26.12.2007**
(21) Application number: 03010779.1
(22) Date of filing: 14.05.2003
(51) Int. Cl.: A01G 17/08, A01G 17/06

(54) **Swinging support device for vine shoots**
Schwingender Träger für Weinreben
Support pivotant pour sarments de vigne

(30) Priority: 11.06.2002 IT PN20020041
(43) Date of publication of application: 17.12.2003
(73) Proprietor: Venturin, Agostino, 31010 Mareno, TV (IT)
(72) Inventor: Venturin, Agostino, 31010 Mareno, TV (IT)
(74) Representative: Dalla Rosa, Adriano

(56) References cited:
- CH-A- 685 187
- DE-U- 8 509 592
- DE-U- 8 909 267
- FR-A- 1 534 929
- FR-E- 43 543

## Description

The invention relates to a swinging support device for grapes vine shoots, adapted to be fitted on vineyard stakes and to be swung on different positions in order to support the shoots of the relative vines.

From CH-685 187 A5 is known a retractable bracket to be mounted on to vineyard stakes for supporting the vine shoots, said bracket being formed by a fixed part secured by one screw and a bolt to each stake and by two movable side parts, which are articulated to said fixed part.

The movable parts are provided with a respective seat for accommodating and guiding a relative wire supporting the vine shoots, and both the movable side parts can be moved separately or contemporaneously on the fixed part from a first horizontal position to a second vertical position, and can be locked in each position by a system bolt-nut, and in the horizontal position such movable parts abut on to a relative bent end portion of the fixed part.

In this manner, it is possible to arrange the wires and the vine shoots into different positions, in which the distance between the wires supported by both the movable parts is changed, by moving the movable parts into different positions thereof, and when both the moving parts are arranged vertically the wires are spaced away of the mimimum distance therefrom, for the grapes ripening before the vintage, while when both the moving parts are arranged horizontally the wires are spaced away of the maximum distance therefrom, during the vintage operation, so as to permit the passage of the vintage machines through such wires and the vine shoots.

The present invention relates to a swinging support device for grapes vine shoots, to be fitted on vineyard stakes for supporting the wires supporting such shoots, which device is made in a manner different than that disclosed by the prior art disclosed by CH- 685 187 A5.

The invention will be better understood from the following description, given solely by way of not-limitative example and with reference to the accompanying drawings wherein :
- Fig. 1 shows a perspective front view of a pair of vine shoots support stakes, provided with a respective swinging support device according to the invention, displaced on a first operative position thereof;
- Fig. 2 shows with the same view of Fig. 1 the pair of support stakes, with the respective swinging support device displaced on a second operative position thereof;
- Fig. 3 shows a front view of the support device according to the invention, displaced on the operative position of Fig. 1, and in a first embodiment thereof;
- Fig. 4 shows a side view of a component part of the device of Fig. 3 ;
- Fig. 5 shows a front view of the support device of Fig. 3, displaced on the operative position of Fig. 2;
- Fig. 6 shows a front view of the support device according to the present invention, displaced on the operative position of Fig. 1, and in a second embodiment thereof;
- Figs. 7 and 8 show a perspective front view of a constructive item of the support device of Fig. 6, on two different constructive versions thereof;
- Fig. 9 shows a front view of a constructive item of the support device of Fig. 6, on another constructive version thereof;
- Fig. 10 shows a front view of the support device according to the present invention, displaced on the operative position of Fig. 2 and in a third embodiment thereof;
- Figs. 11 and 12 show a perspective front view of a constructive item of the support device of Fig. 1, on to two different constructive versions thereof.

The above mentioned Figures schematically show a grapes vine 5, the shoots 6 of which are supported by the metallic wires 7 supported by a pair of swinging support devices 8 according to the invention, fitted on the upper portion of a corresponding vertical stake 9 drawn in the ground.

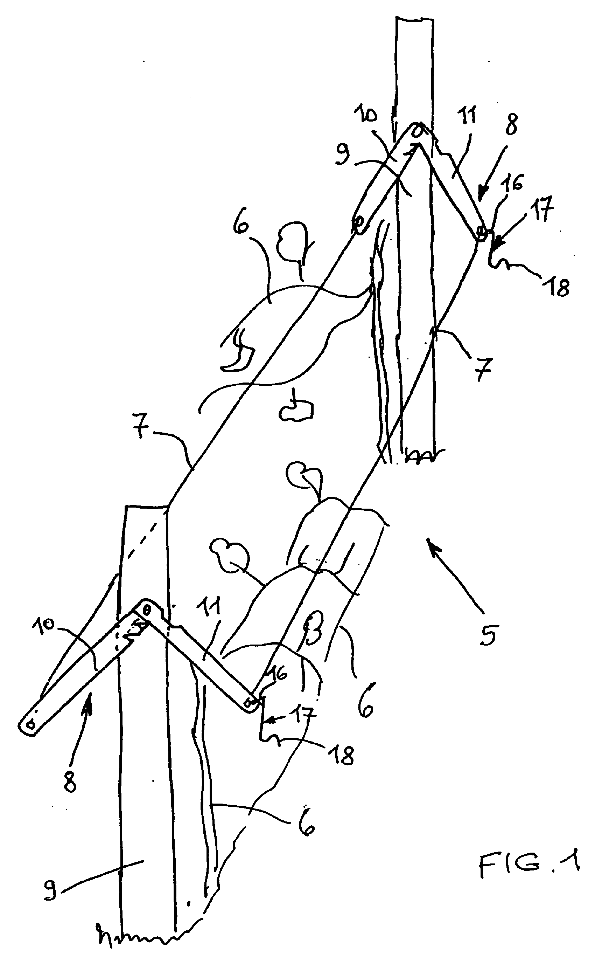

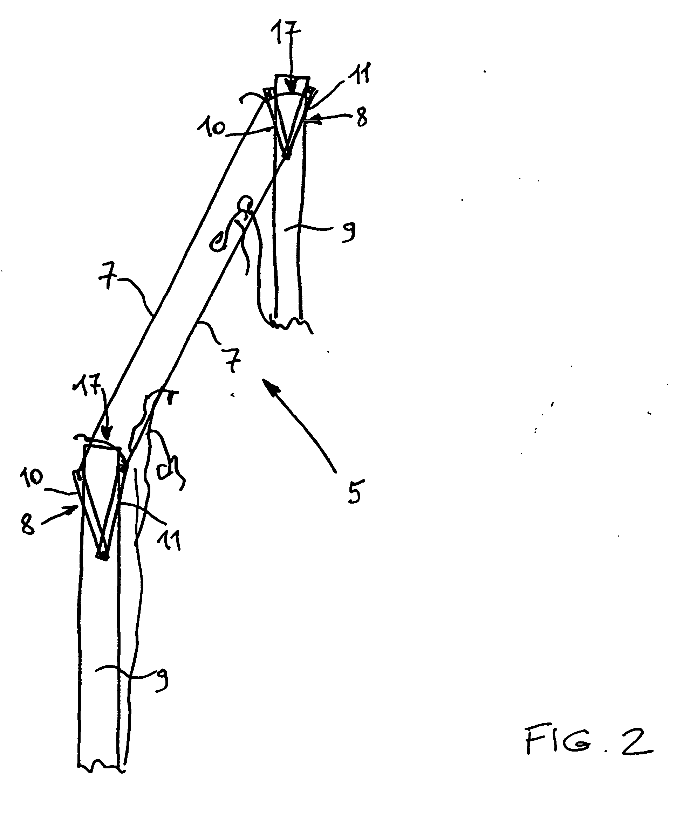

Each swinging support device 8 may be displaced as it will be described later from a first operative position thereof, shown on Fig. 1, in which the wires 7 are moved away from each other of the greater spacing, thereby supporting effectively the shoots 6 so as to permit a correct exposure to sunshine and the ripening of the grapes bunches supported by the same shoots, before the vintage of such grapes bunches, to a second operative position thereof shown on Fig. 2, in which the wires 7 are moved away and approached to each other of the minimum spacing, by supporting the shoots always in a correct way, in order to change in the time the position of the grapes bunches with respect to the sun position, thereby ensuring the better exposure to sunshine of the grapes bunches and therefore the wine better quality, and to permit the vintage machines to pass and to be displaced between a vine row and the other one without squeezing and damaging the vine shoots, in that in this case such shoots are moved away laterally toward the vine and therefore are less contacting the vintage machines.

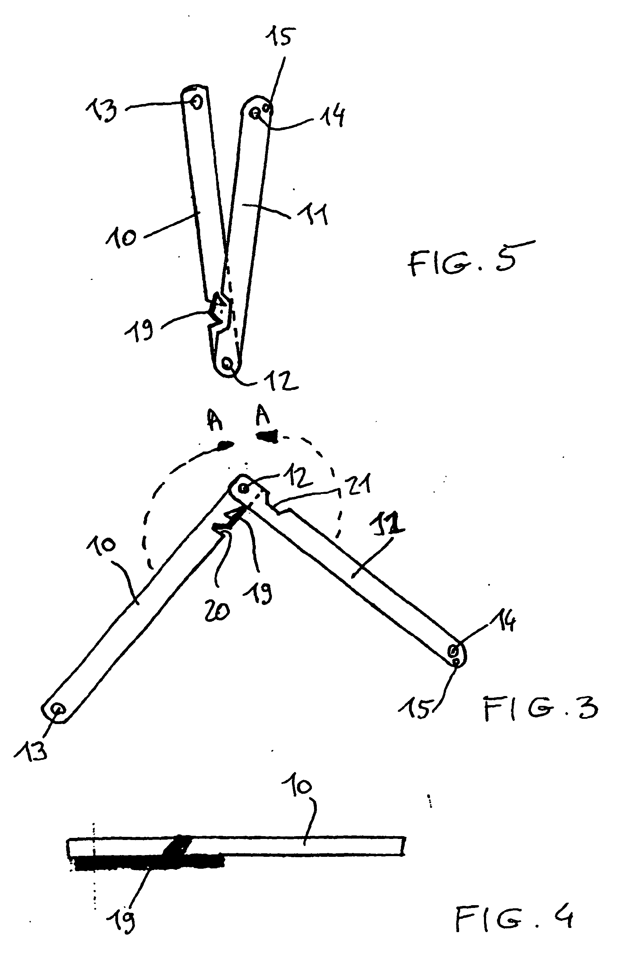

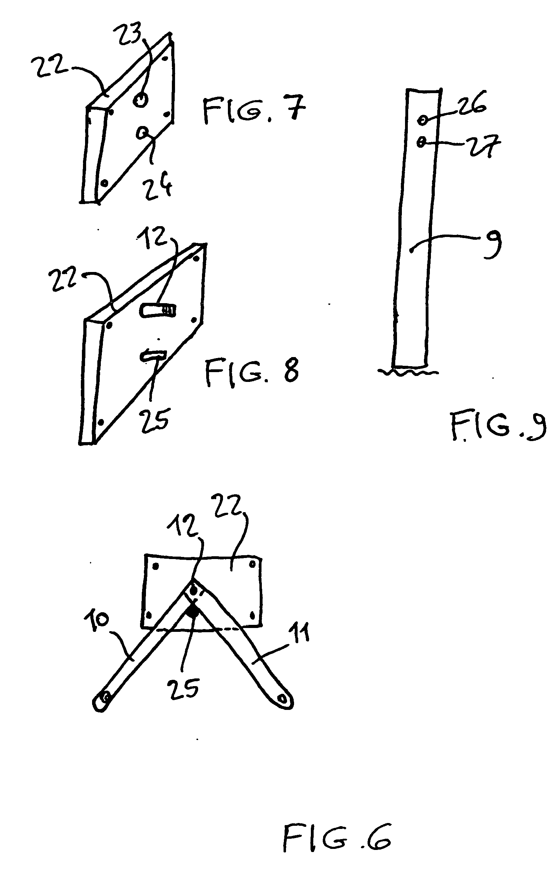

As visiblle from Figs. 3-5, in which a swinging support device 8 according to the invention is shown in a first embodiment thereof, which device is identical to that shown on Figs. 1 and 2, it is noted that it is constituted substantially by at least a pair of extended arms 10 and 11, provided with end portions which are articulated to each other in a suitable manner, for example by means of a stud 12 secured to the upper portion of the corresponding stake 9, and with free end portions provided with a respective through hole 13 and 14, for passing and fixing a corresponding wire 7 supporting the shoots 6, wherein an additional through hole 15 is provided near at least one of these through holes (in this case, the through hole 14), and wherein the bent end portion 16 of a hook 17 (see Figs. 1 and 2) is fixed to said additional through hole 15 and provided with another bent end portion 18 whose function will be explained later on, and in the present case is disengaged from other vine parts. In this way, the extended arms 10 and 11 may be swung from each other on different positions, while rotating an arm with respect to the other one about the stud 12, and this rotation may be effected from the maximum extended position shown on Figs. 1, 3 and 6, in which the arms are swung downwards by rotating about the stud 12, by arranging themselves inclined downwards and spread apart from each other on the first operative position thereof, to the minimum extended position shown on Figs. 2, 5 and 10, in which the arms are swung upwards by rotating about the stud 12 in the direction A, and by arranging themselves inclined upwards and approached to each other on the second operative position thereof. Moreover, these arms are so shaped as not to be rotated again in the same direction at any operative position thereof, thanks to the presence of suitable locking means which in the example referred to are constituted by a blade 19 pivoted on to one of the arms (in the present case, the arm 10) and projected laterally therefrom, and at least a respective slit 20 and 21 provided on the side edge of the corresponding arms 10 and 11, against which such blade abuts when the arms are displaced respectively on the maximum and minimum extent thereof. In this way, the present swinging support device may be displaced from its first operative position (see Fig. 1), to its second operative position (see Fig. 2), in which the arms 10 and 11 and the shoot supporting wires 7 are approached to each other, so that the hook 17 arranges itself near the same wires and engage them reciprocally with its bent end portion 18, thereby preventing any displacement of such wires and the shoots supported thereto for the entire duration in which the device is displaced on this second operative position, so that to prevent the shoots from being displaced from this position and damaged when the vintage machine is passing therethrough. Instead described as above, the device locking the arms 10 and 11 may be also made in a different manner, still permitting to perform the same function thereof. Figs. 7, 8 and 9 show further constructive versions of the locking device, adapted to prevent any additional displacement downwards of the arms swung on the first operative position thereof (see Fig. 6).

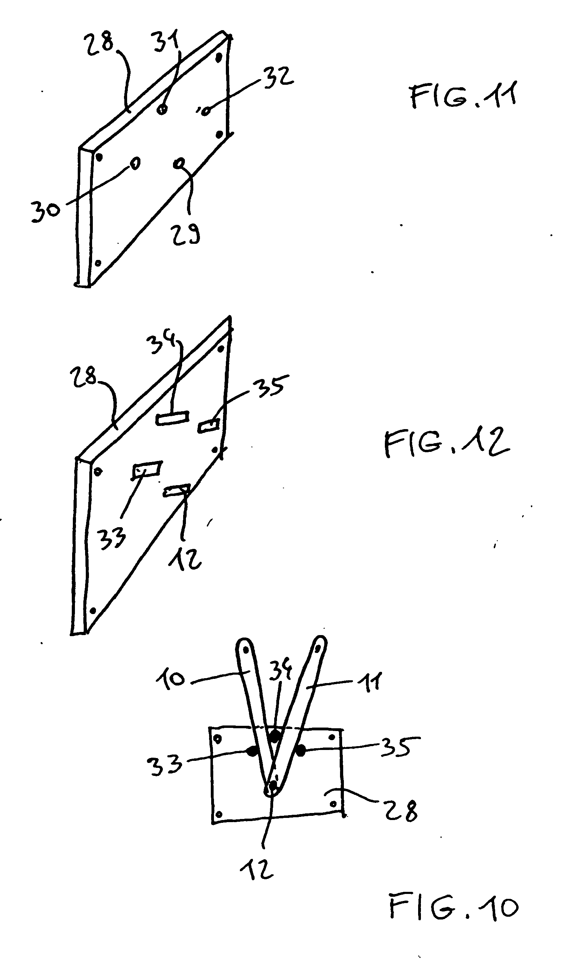

From Fig. 7 it is noted that such locking device is constituted by a plate 22 which is secured on to the upper portion of a relative vertical stake 9, and is provided with two through holes 23 and 24 overlapped and slightly spaced away to each other, of which the upper hole 23 serves to insert the stud 12 of the two arms 10 and 11, and the lower hole 24 serves to insert a protruded retainer 25 for the abutment of both arms when they are displaced on the first operative position thereof. From Fig. 8 it is noted that such locking device is constituted by the same plate 22 provided with an upper protruded stud 12 and a lower protruded retainer 25, performing the same function of the corresponding components of Fig. 7. From Fig. 9 it is noted that such locking device is constituted by two blind holes 26 and 27 provided directly on the upper portion of each vertical stake 9, on a superimposed and slightly spaced away position, for inserting therein a corresponding stud and a protruded retainer performing the same function of those previously described.

Figs. 10, 11 and 12 show further constructive versions of the locking device, adapted to prevent an additional displacement upwards of the arms being swung on the second operative position thereof (see Fig. 10). From Fig. 11 it is noted that such locking device is constituted by a plate 28 which is secured on the upper portion of a relative vertical stake 9, and is provided with a lower and central through hole 29 for inserting therein the stud 12 of the two arms 10 and 11, and three upper through holes 30, 31 and 32 superimposed to each other and spaced away from such lower hole and offset angularly from each other, for inserting therein corresponding protruded retainers 33, 34 and 35 adapted to lock both arms when they are displaced on the second operative position thereof.

From Fig. 12 it is noted that such locking device is constituted by the same plate 28 provided with a lower and central protruded stud 12 and three protruded retainers 33, 34 and 35, offset angularly to each other and overlapped to and slightly spaced away from such lower stud 12, so as to perform the same function as described on Fig. 11.

## Claims

1. Swinging support device for grapes vine shoots, adapted to be fitted on vineyard stakes for supporting the wires supporting such shoots, comprising at least a pair of extended arms (10, 11) applied on the upper portion of each one of said stakes (9) and supporting at least a respective support wire (7), said arms (10, 11) being provided with an end portion articulated to each other in a suitable manner, for example by means of a stud (12) secured to the upper portion of the corresponding stake (9), and with a free end portion provided with a relative through hole (13, 14) for passing and fixing a corresponding supporting wire (7), said arms (10, 11) being rotated about their articulated end portion from a first operative position thereof, in which said wires (7) are spaced away of the maximum spacing from each other, for grapes ripening before the vintage with the aid of vintage machines, to a second position thereof in which said wires (7) are spaced away and approached of the minimum spacing to each other, in order to change the position of the grapes with respect to the sun before the vintage takes place, so as to ensure the better exposure to sunshine thereof and therefore the better wine quality, and to perform the vintage operation by means of said vintage machines, **characterized in that** said support arms (10, 11) are associated with locking means formed by at least a blade (19) and at least a respective slit (20, 21), or by protruded retainers (25 ; 33, 34, 35) provided on a relative stake (9), for the abutment of said support arms (10, 11), and that one of the end portions of said support arms (10, 11) is provided with an additional through hole (15), in which the bent end portion (16) of a hook (17) is fixed, which is provided with another bent end portion (18) adapted to engage said supporting wires (7) when said arms (10, 11) are displaced on to the second operative position thereof.

2. Swinging support device according to claim 1, **characterized in that** said blade (19) is pivoted on to one of said arms (10, 11) and projected laterally therefrom, and that said slit (20, 21) is provided on the side edge of the corresponding arms (10, 11), against which said blade (19) abuts when the arms (10, 11) are displaced respectively on the maximum and minimum extent thereof.

3. Swinging support device according to claim 1, **characterized in that** said protruded retainer (25) can be inserted, together with said stud (12), into a respective through hole (24, 23), which holes are provided on overlapped and slightly spaced away position on a plate (22), secured on to the upper portion of a relative vertical stake (9), for the abutment of both said arms (10, 11), when they are displaced on the first operative position thereof.

4. Swinging support device according to claim 3, **characterized in that** said plate (22) is provided with said stud (12) and said protruded retainer (25).

5. Swinging support device according to claim 3, **characterized in that** said protruded retainer (25) can be inserted, together with said stud (12), into a respective blind hole (27, 26), which holes are provided directly on the upper portion of each vertical stake (9), on a superimposed and slightly spaced away position.

6. Swinging support device according to claim 3, **characterized in that** said protruded retainers (33, 34, 35) are adapted to lock said arms (10, 11) when they are displaced on the second operative position thereof, said protruded retainers (33, 34, 35) being adapted to be inserted into three corresponding upper through holes (30, 31, 32) superimposed and offset angularly from each other, provided on a plate (28) which is secured on the upper portion of a relative vertical stake (9), and which is provided with a lower and central through hole (29), spaced away from said upper through holes (30, 31, 32), and into which said stud (12) can be inserted.

7. Swinging support device according to claim 6, **characterized in that** said plate (28) is provided with said stud (12) and said protruded retainers (33, 34, 35).

## Patentansprüche

1. Schwingender Träger für Weinreben, der geeignet ist, an Weinbergstangen befestigt zu werden, um die Drähte zu halten, die solche Reben halten, enthaltend wenigstens ein Paar geöffneter Tragarme (10, 11), die an dem oberen Teil jeder der Stangen (9) angebracht sind und wenigstens einen zugehörigen Haltedraht (7) halten, wobei die Tragarme (10,11) mit einem Endabschnitt versehen sind, die aneinander auf eine geeignete Weise angelenkt sind, beispielsweise mittels eines Stiftes (12), der an dem oberen Teil der zugehörigen Stange (9) befestigt ist, und mit einem freien Endabschnitt, der mit einer zugehörigen Durchgangsbohrung (13,14) versehen ist, zum Durchgang und zum Fixieren eines zugehörigen Haltedrahts (7), wobei die Tragarme (10,11) um ihren angelenkten Endabschnitt aus einer ersten operativen Position, in der die Drähte (7) den maximalen Abstand voneinander haben, für das Reifen der Weintrauben vor der Weinlese mit der Hilfe von Lesemaschinen, in eine zweite Position gedreht werden, in der die Drähte (7) sich mit dem minimalen Abstand voneinander annähern, um die Position der Reben bezüglich der Sonne zu ändern, bevor die Weinlese stattfindet, um sicher zu stellen, dass sie besser dem Sonnenlicht ausgesetzt sind und **dadurch** die Weinqualität besser wird, und um den Weinlesevorgang mit Hilfe der Weinlesemaschinen durchzuführen,
**dadurch gekennzeichnet,**
**dass** die Tragarme (10,11) mit Verriegelungsmitteln versehen sind, die durch wenigstens einen Schenkel (19) und wenigstens einen zugehörigen Schlitz (20,21) gebildet sind oder durch vorstehende Halter (25;33, 34, 35) an einer zugehörigen Stange (9) als Widerlager der Tragarme (10,11), und dass einer der Endabschnitte der Tragarme (10,11) mit einem zusätzlichen Durchgangsloch (15) versehen ist, in dem der gebogene Endabschnitt (16) eines Hakens (17) fixiert ist, der mit einem weiteren gebogenen Endabschnitt (18) versehen ist, der geeignet ist, in Eingriff mit den Haltedrähten (7) zu geraten, wenn die Arme (10,11) in ihre zweite operative Position verlagert sind.

2. Schwingender Träger nach Anspruch 1,
**dadurch gekennzeichnet,**
**dass** der Schenkel (19) an einem der Arme (10,11) angelenkt ist und seitlich von diesem vorsteht, und dass der Schlitz (20,21) an dem seitlichen Rand des zugehörigen Arms (10,11) vorgesehen ist, gegen den der Schenkel (19) anstößt, wenn die Arme (10,11) in dem maximalen und minimalen Ausmaß verstellt sind.

3. Schwingender Träger nach Anspruch 1,
**dadurch gekennzeichnet,**
**dass** der vorstehende Halter (25) zusammen mit dem Stift (12) in ein zugehöriges Durchgangsloch (24,23) eingesetzt werden kann, wobei die Löcher an überlappten und leicht beabstandeten Positionen an einer Platte (22) vorgesehen sind, befestigt an dem oberen Teil einer zugehörigen vertikalen Stange (9) zur Anlage der beiden Arme (10,11), wenn sie in ihre erste operative Position verstellt sind.

4. Schwingender Träger nach Anspruch 3,
**dadurch gekennzeichnet,**
**dass** die Platte (22) mit dem Stift (12) und dem vorstehenden Halter (25) versehen ist.

5. Schwingender Träger nach Anspruch 3,
**dadurch gekennzeichnet,**
**dass** der vorstehende Halter (25) zusammen mit dem Stift (12) in ein zugehöriges Sackloch (27,26) eingesetzt werden kann, wobei die Löcher direkt an dem oberen Teil jeder vertikalen Stange (9) an einer überlagerten und leicht voneinander beabstandeten Position vorgesehen sind.

6. Schwingender Träger nach Anspruch 3,
**dadurch gekennzeichnet,**
**dass** die vorstehenden Halter (33, 34, 35) geeignet sind, die Arme (10,11) zu fixieren, wenn sie in ihre zweite operative Position verlagert sind, dass die vorstehenden Halter (33,34,35) geeignet sind, in drei zugehörige obere Durchgangslöcher (30,31,32) eingesetzt zu werden, die überlagert und winkelmäßig zueinander versetzt an einer Platte (28) vorgesehen sind, die an dem oberen Teil einer zugehörigen vertikalen Stange (9) befestigt ist, und die mit einem unteren und mittigen Durchgangsloch (29) versehen ist, das von den oberen Durchgangslöchern (30,31,32) beabstandet ist und in das der Stift (12) eingesetzt werden kann.

7. Schwingender Träger nach Anspruch 6,
**dadurch gekennzeichnet,**
**dass** die Platte (28) mit dem Stift (12) und den vorstehenden Haltern (33,34,35) versehen ist.

## Revendications

1. Dispositif de support oscillant destiné à des sarments de vigne, conçu pour être adapté sur des piquets de vignoble afin de supporter les fils supportant ces sarments, comprenant au moins une paire de bras (10, 11) allongés appliquée sur la portion supérieure de chacun desdits piquets (9) et supportant au moins un fil de support (7) respectif, lesdits bras (10, 11) étant dotés d'une portion d'extrémité articulée l'un à l'autre d'une manière appropriée, par exemple à l'aide d'un goujon (12) fixé sur la portion supérieure du piquet (9) correspondant, et d'une portion d'extrémité libre dotée d'un trou traversant (13, 14) relatif permettant de faire passer et de fixer un fil de support (7) correspondant, lesdits bras (10, 11) étant amenés à tourner autour de leur portion d'extrémité articulée à partir d'une première position fonctionnelle de ceux-ci, dans laquelle lesdits fils (7) sont éloignés de l'espacement maximal qui les sépare, pour les grappes qui mûrissent avant la vendange à l'aide de vendangeuses, jusqu'à une seconde position de ceux-ci dans laquelle lesdits fils (7) sont éloignés et rapprochés à l'espacement minimum qui les sépare, afin de modifier la position des grappes par rapport au soleil avant que la vendange ne se produise, de manière à garantir la meilleure exposition possible au soleil de celles-ci, et donc la meilleure qualité de vin, et à réaliser l'opération de vendange à l'aide desdites vendangeuses, **caractérisé en ce que** lesdits bras de support (10, 11) sont associés à des moyens de verrouillage formés par au moins une lame (19) et au moins une fente (20, 21) respective, ou par des éléments de retenue (25, 33, 34, 35) en saillie prévus sur un piquet (9) relatif, afin d'assurer la butée desdits bras de support (10, 11), et **en ce que** l'une des portions d'extrémité desdits bras de support (10, 11) est dotée d'un trou traversant (15) supplémentaire, dans lequel est fixée la portion d'extrémité incurvée (16) d'un crochet (17), qui est doté d'une autre portion d'extrémité incurvée (18) conçue pour s'engager avec lesdits fils de support (7) lorsque lesdits bras (10, 11) sont déplacés vers leur seconde position fonctionnelle.

2. Dispositif de support oscillant selon la revendication 1, **caractérisé en ce que** ladite lame (19) est amenée à pivoter sur l'un desdits bras (10, 11) et fait saillie latéralement par rapport à ceux-ci, et **en ce que** ladite fente (20, 21) est prévue sur le bord latéral des bras (10, 11) correspondants, contre lesquels ladite lame (19) est en butée lorsque les bras (10, 11) sont déplacés respectivement sur leur étendue maximale et minimale.

3. Dispositif de support oscillant selon la revendication 1, **caractérisé en ce que** ledit élément de retenue en saillie (25) peut être inséré, conjointement avec ledit goujon (12), dans un trou traversant (24, 23) respectif, lesquels trous sont prévus à une position de recouvrement et légèrement espacée sur une plaque (22), fixés sur la portion supérieure d'un piquet vertical (9) relatif, pour la butée desdits deux bras (10, 11) lorsqu'ils sont déplacés dans leur première position fonctionnelle.

4. Dispositif de support oscillant selon la revendication 3, **caractérisé en ce que** ladite plaque (22) est dotée dudit goujon (12) et dudit élément de retenue (25) en saillie.

5. Dispositif de support oscillant selon la revendication 3, **caractérisé en ce que** ledit élément de retenue en saillie (25) peut être inséré, conjointement avec ledit goujon (12), dans un trou borgne (27, 26) respectif, lesquels trous sont prévus directement sur la portion supérieure de chaque piquet vertical (9), à une position superposée et légèrement espacée.

6. Dispositif de support oscillant selon la revendication 3, **caractérisé en ce que** lesdits éléments de retenue en saillie (33, 34, 35) sont conçus afin de verrouiller lesdits bras (10, 11) lorsqu'ils sont déplacés dans leur seconde position fonctionnelle, lesdits éléments de retenue en saillie (33, 34, 35) étant conçus pour être insérés dans trois trous traversants (30, 31, 32) supérieurs correspondants superposés et décalés angulairement l'un par rapport à l'autre, ménagés sur une plaque (28) qui est fixée sur la portion supérieure d'un piquet vertical (9) relatif, et qui est dotée d'un trou traversant inférieur central (29), espacé desdits trous traversants supérieurs (30, 31, 32) et dans laquelle ledit goujon (12) peut être inséré.

7. Dispositif de support oscillant selon la revendication 6, **caractérisé en ce que** ladite plaque (28) est dotée dudit goujon (12) et desdits éléments de retenue en saillie (33, 34, 35).
